# EUROPEAN PATENT APPLICATION

(11) **EP 4 296 299 A1**
(43) Date of publication of application: **27.12.2023**
(21) Application number: 22180902.3
(22) Date of filing: 24.06.2022
(51) Int. Cl.: C08J 5/22, H01M 8/1023, H01M 50/414

(54) **METHOD FOR PREPARING AN ION EXCHANGE MEMBRANE**

(71) Applicant: Technische Universität Graz, 8010 Graz (AT)
(72) Inventor: Spirk, Stefan, 8010 Graz (AT); Pachernegg, Lukas, 8010 Graz (AT); Coclite, Anna, 8010 Graz (AT); Bauer, Wolfgang, 8010 Graz (AT)
(74) Representative: Schwarz & Partner Patentanwälte GmbH

(57) **Abstract**

The present invention relates to a method for producing an ion exchange membrane comprising the steps of:
a. applying an ionic liquid comprising at least one polymerizable and/or crosslinking group at the cation and/or at the anion on a cellulosic substrate and
b. polymerizing and/or crosslinking said at least one polymerizable and/or crosslinking groups forming a polymer or copolymer layer on the cellulosic substrate.

## Description

### BACKGROUND OF THE INVENTION

Ion exchangers are materials with which dissolved ions can be replaced by other ions. Ion exchangers are usually marketed in the form of a column containing an ion exchange resin or a membrane through which the solution to be treated flows. The ion exchange process can be divided into two mechanisms, depending on the application: (i)Ions to be exchanged are bound to the ion exchange material, which then releases an equivalent charge of previously bound ions into the solution (hopping mechanism). (ii)Ions are bound to a charge carrier which can diffuse freely in a liquid (vehicle mechanism)

The principles behind an ion exchange are that the higher the charge of the ions, the more strongly they are bound to the ion exchange material and for the same charge, the larger their ion radius. The ion that binds more strongly to the ion exchange material displaces other ions from the respective binding site. Important influencing factors are the pH value and the substance concentration. The transport of ions through an ion exchange membrane is driven by convection, diffusion, and migration.

Ion exchange membranes are thin films that can be passed through by either positively or negatively charged ions. Thus, such membranes represent a charge-selective filter and can be used for enriching or separating charge carrying species in solutions.

Ion exchange membranes typically comprise charged functional groups which are bound by covalent bonds to the membrane material (e.g. organic and/or inorganic polymer). The negative or positive charge of the membrane is compensated by mobile ions in the surrounding solution. These mobile counterions can be exchanged by any ions of the same charge, which allows them to pass through the membrane. For ions with the same sign as the fixed ions, the membrane represents a barrier.

Ion exchange membranes are used in fuel cells and batteries, for instance. In such cells and batteries these membranes act as a separator between two compartments and its electrolytes, as an ion conductor and as an electrical insulator to prevent a short circuit in the cell. These membranes are a major cost factor in fuel cells and battery systems. The most commonly used membranes are perfluorinated polymer membranes such as Nafion^{™}. Perfluorinated polymer membranes are a major cost factor and undesired crossover properties are still a limiting factor of these membranes. Alternative ion exchange membranes are mainly based on synthetic polymers and have their individual advantages and drawbacks.

It is therefore an object of the present invention to provide ion exchange membranes which overcome the drawbacks of ion exchange membranes known in the art. The ion exchange membranes shall have superior properties than widely applied perfluorinated polymer membranes, being producible at lower costs and having a lower environmental impact.

### SUMMARY OF THE INVENTION

Hence, the present invention relates to a method for producing an ion exchange membrane comprising the steps of:
a. applying an ionic liquid comprising at least one polymerizable and/or crosslinking group at the cation and/or at the anion on a cellulosic substrate and
b. polymerizing and/or crosslinking said at least one polymerizable and/or crosslinking groups forming a polymer or copolymer layer on the cellulosic substrate.

Surprisingly, it has been shown that the process of the invention can be used to produce an ion exchange membrane with the desirable properties mentioned above.

The use of a cellulosic substrate and copolymerized ionic liquid possess a low diffusivity of the active species and a high ion conductivity. Both of the properties are surprisingly out-performing the commercially available membranes.

Furthermore, the use of combinations of various materials and new production methods allows individual adaptation to various types of environments. This opens a wide range of opportunities.

Thus, another aspect of the present invention relates to an ion exchange membrane obtainable by a method according to the present invention.

The ion exchange membrane produced according to the invention can be used for different applications. Accordingly, a further aspect of the present invention relates to a redox flow cell comprising an ion exchange membrane of the present invention between a cathode and an anode cell.

The ion exchange membrane obtained by the method according to the present invention can further be used to separate any cathode chamber from any anode chamber. This application is in redox flow cells, fuel cells and galvanic cells especially useful.

### DESCRIPTION OF THE FIGURES

Figs. 1a and 1b show the contact angle and the volume of a droplet on the respective membrane surface.
Fig. 2A shows the through plane cell stack used for the redox flow battery membrane measurements and Fig. 2B shows the corresponding equivalent circuit.
Fig. 3 shows the results of a battery test with the paper/[EMIM][AC] membrane of the present invention, where the 30 minutes step times between the charge and discharge as well as the coulombic efficiency are illustrated.

### DETAILED DESCRIPTION OF THE INVENTION

The method of the present invention allows the production of ion exchange membranes using a cellulosic substrate which can be used as alternatives for ion exchange membranes known in the art. Depending on the used ionic liquid and the resulting polymerization, cation exchange membranes and/or anion exchange membranes can be produced. Cation exchange membranes facilitate the transport of positively charged moieties throughout the membrane. The positive groups in the anion exchange membrane repulse cations. The method according to the invention can also be used to produce an amphoteric membrane. Amphoteric membranes contain anionic and cationic active groups. Hence, the ion exchange membrane obtainable with the method of the present invention can be an anion, cation or amphoteric/bipolar exchange membrane.

"Cellulosic substrate", as used herein, refers to a thin material produced by either a papermaking process i.e. pressing together moist fibres, typically cellulose pulp derived from wood, rags or grasses and drying into flexible sheets. The cellulosic substrate could also be produced from recycled material such as recycled paper. The cellulosic substrate could also be produced from nano and microfibrillated cellulose or by refining pulp fibers. A cellulosic substrate in the context of the invention also comprises films produced by regeneration of cellulose in the viscose process. The cellulosic substrate used in the present invention can be, for instance, a paper filter or a cellophane film. The cellulosic substrate can have an average thickness of 10 to 500 µm, preferably from 50 to 250 µm, more preferably from 100 to 200 µm, and even more preferred from 130 to 150 µm.

In the following, "ionic liquid" is understood to mean a compound that consists only of ions and has a melting point below 100°C. Typically ionic liquids are non-volatile, non-flammable,thermally stable and feature high ion conductivity. Their physiochemical properties can be tailor-made for the corresponding application. Ionic liquids consist of anions and cations. Due to their low vapour pressure, such solvents are more environmentally friendly than classical solvents.

The term "polymerizable group", as used herein, refers to a chemical group/moiety which is suitable for a polymerization reaction, such as, for example, free-radical or ionic chain polymerization, polyaddition or polycondensation. Monomers comprising polymerizable groups may form oligomers or polymers, where the monomers are covalently bound to each other forming a polymer chain. "Crosslinking groups", as used herein, are chemical groups/moieties which are able to form covalent bonds between polymer chains. Polymerizable and crosslinking groups may be chemically similar or even identical.

According to a particularly preferred embodiment of the invention the polymerizable and/or crosslinking group is an alkenyl group or an alkynyl group.

It has been shown that the use of these groups is advantageous because the double or triple bond create a reactive centre that can react with the free radicals. The formed compound can then react again at the reactive centre of the monomer and thus lead to the formation of polymers. Thereby it is even more preferred that the polymerizable and/or crosslinking group is selected from the group consisting of a vinyl group, allyl group and methacrylate group.

Ionic liquids can be divided into alkylammonium, dialkyl-imidazolium, phosphonium and N-alkylpyridinium based ionic liquids. For the method according to the invention preferably dialkyl-imidazolium based ionic liquids are used. Dialkyl-imidazolium based ionic liquids consist of an imidazolium ring as a cation and a suitable anion. The special structure results in high stability in oxidative and reductive conditions, low viscosity and is comparable easy to synthetize.

According to an especially preferred embodiment of the present invention the cation of the ionic liquid is selected from the group consisting of imidazole salt cations and derivatives thereof, preferably 1-ethyl-3-methylimidazolium, 1-allyl-3-methylimidazolium, 1-butyl-3-methylimidazolium, 1-Vinyl-3-butylimidazolium, 1-Ethyl-3-methylimidazolium, 1-Hexyl-3-ethylimidazolium, 1-Methylimidazolium and 1-Hexyl-3-methylimidazolium, quaternary ammonium salt cations, preferably 2-Hydroxyethyl-trimethylammonium, pyrrole salt cations, preferably 1-Butyl-1-methylpyrrolidinium, quaternary phosphine salt cations, preferably Triethyl(4-vinylbenzyl)phosphonium tetrafluoroborate and Trihexyltetradecylphosphonium and pyridine salt cations, preferably 1-Butyl-1-methylpiperidinium. As a cation in the ionic liquid more particularly preferred is the use of 1-allyl-3-methylimidazoliuma and 1-ethyl-3-methylimidazolium.

According to a particularly preferred embodiment of the present invention the anion of the ionic liquid is selected from the group consisting of acrylate, dicyanamide, acetate, preferably vinyl acetate, phosphonate, preferably vinyl phosphonate, bis((trifluoromethyl)sulfonyl)imide, bis((pentafluoromethyl)sulfonyl)imide, hexafluoro phosphate, tetrafluoroborate, methyl sulfate, triflate, thiocyanate, trifluoroacetate, hydrogen sulfate or halides.

According to a particularly preferred embodiment of the present invention the ionic liquids are selected from the group consisting of 1-ethyl-3-methylimidazolium acrylate, 1-allyl-3-methylimidazolium dicyanamide, 1-ethyl-3-methylimidazolium vinyl acetate,1-ethyl-3-methylimidazolium vinyl phosphonate and 1-Allyl-3-methylimidazolium methansulfonate, 1-butyl-3-methylimidazolium acrylate or 1-hexyl-3-methylimidazolium acrylate. Even more preference is given to the use of 1-ethyl-3-methylimidazolium acrylate and 1-ethyl-3-methylimidazolium vinyl acetate.

According to an especially preferred embodiment of the present invention the polymerisation is initiated by a radical reaction induced by chemical, and/or photochemical, and/or thermochemical and/or plasma methods. It has been shown that polymerisation can occur through the multiple combination of ionic liquid and monomer. To start the process of polymerisation, it is advantageous to possess a reactive cation or anion of the ionic liquid. This reactive ion can lead to free radical polymerisation and react with both the monomer and the ionic liquid. The formation of the reactive ion and thus the radical is preferably initiated by one of the methods mentioned. A chemically induced reaction is preferably a charge-changing effect that is mainly triggered by functional groups or individual atoms. A photochemical induction, on the other hand, is a chemical reaction that is triggered by the action of light. Accordingly, thermochemical induction is preferably a reaction that is triggered by the action of heat, and plasma induction is preferably a reaction that is triggered by the action of an external induction coil on plasma.

According to a particularly preferred embodiment of the present invention the polymerisation is initiated by means of vapor deposition which includes oxidative chemical vapor deposition, chemical initiated vapor deposition and plasma enhanced chemical vapor deposition or by the use of UV radiation, thermal activation and formation of radicals with transition metal complexes, which employ an alkyl halide as initiator. Especially preferred the polymerization is initiated by means chemical vapor deposition using a thermal initiator. The thermal initiator is particularly preferably a peroxide, preferably tert-butyl peroxide, dibenzoyl peroxide, perfluorooctance sulfonyl fluoride, triethylamine, 2,2'azobis (2 methylpropane), benzophenone or 2-bromoisobutyryl bromide.

According to an especially preferred embodiment of the present invention the cellulosic substrate is contacted after step a. with at least one polymerizable monomer and/or at least one crosslinker. This especially preferred embodiment has the advantage of fixation of the ionic liquid in the polymer matrix by copolymerisation. Copolymerisation further improves the mechanical stability and minimizes the losses of ionic liquids resulting from weak interactions. Also the growth rate can be influenced especially positively by the introduction of a monomer and/or a crosslinker since it influences the growth rate of the polymer layer. The growth rate is influenced by the adsorption of the monomer and/or crosslinker on the substrate surface.

According to a particularly preferred embodiment of the present invention the at least one polymerizable monomer and/or the at least one crosslinker comprises at least one alkenyl or alkynyl group or ring structure which can be opened during reaction. The double or triple bonds of the alkenyl and alkynyl groups and the ring structure form reactive centres, which lead to bonds being formed more easily at these sites. The reactive centre of the monomer leads to polymer growth, while the reactive centre enables polymer chains to be linked. Even more preferably, the polymerizable monomer and/or crosslinker comprises an alkenyl group and/or a ring structure which can be opened during reaction.

According to another especially preferred embodiment of the present invention the at least one polymerizable monomer and/or at least one crosslinker is selected from the group consisting of methacrylic acid, a methacrylate, whereby of the methacrylates ethylene glycol di-methacrylate, 2-hydroxy ethyl methacrylate, and C₁ to C₆-methacrylate compounds are particularly preferred, divinyl benzene, hexa-vinyl disiloxane, 1,3,5-trimethyl-1,3,5-trivinylcyclotrisiloxan, or ethylene glycol dimethacrylate. Especially preferred compounds are ethylene glycol di-methacrylate and 2-hydroxy ethyl methacrylate.

According to another particularly preferred embodiment of the invention the cellulosic substrate is a paper and other substrates derived from a cellulosic raw material which can be used in an acidic or alkaline environment without decomposition, is able to act as a supporting material for the polymer and enables a covalent or physical binding of the polymer towards the cellulose or cellulose derivative. Substrates made of cellulose raw material often have a porous, holey structure. Therefore, it is particularly preferred that the polymer film completely covers the fibres of the substrate and penetrates the holes of the structure. This preferred embodiment provides mechanical and chemical stability against flowing electrolytes. In a more especially preferred embodiment, the cellulosic substrate are general use paper filters. The pulp for the production of filter papers can be from softwood, hardwood, fibre crops, and combinations thereof. Especially preferred filters from dissolving pulp or mercerised pulp are used. Particularly preferred the general use paper filters have an average thickness of 10 to 300 µm, more preferably 50 to 250 µm, preferably 100 to 200 µm, more preferably 100 to 150 µm, more preferably 120 to 140 µm.

According to an especially preferred embodiment of the invention the application of the ionic liquid on the cellulosic substrate is carried out by means of solution based coating technologies, such as blade casting, drop casting, spin coating, dip coating, spray coating, and/or gas phase deposition methods using a vapor deposition in a vacuum.

In blade casting a solution is spread onto a flat surface or a supporting layering with a so-called blade. This blade ensures an even spreading as well as a uniform thickness.

Drop casting is a coating technology that involves dripping a solution onto a substrate and then evaporation of the solution. This creates a thin layer on the substrate.

In spin coating, the substrate is fixed on a turntable by means of a vacuum. The desired amount of solvent is applied over the substrate. In order to distribute the solvent evenly, the acceleration, the final speed and the time are adjusted. Excess material is spun off. The solvent is removed by baking to obtain a solid layer.

Dip coating is a coating technology where the substrate is immersed into the solution at constant speed. After sufficient time the substrate is pulled out. While pulling the substrate out a thin coating layer forms on the surface. Excess liquid drips off. Finally, the solvent evaporates from the liquid.

Spray coating is the application of the solution in the form of accelerated spray particles to the surface of the substrate. When the spray particles hit the surface, a layer is formed. The spray particles are more or less flattened by the impact.

Gas phase deposition methods include a variety of film growth technologies, where physical vapor deposition, chemical vapor deposition, atomic layer deposition and molecular beam epitaxy represent the important groupings. In these processes, a solid component is deposited on the surface of the substrate due to the reaction from the gas phase.

The present invention further relates to an ion exchange membrane obtainable by a method disclosed in this invention. The ion exchange membrane according to the invention allows the exchange of certain dissolved ions while the exchange of other ions or neutral molecules. The ion exchange membrane is an electrical conductor. It can be used for the exchange of protons or anions in various fields. The ion exchange membrane according is preferably used in combination with aqueous solutions or water. The applications comprise industrial water treatment, electronic industry, food industry, beverage industry, for purification of a wide range of products, pharmaceutical industry and medical applications.

In addition, the present invention also relates to a redox flow cell comprising an ion exchange membrane according to the invention between a cathode and an anode cell. The redox flow cell consists of the membrane according to the invention, electrodes, bipolar plates, current collectors and two tanks with connected pumps. The active material is stored in dissolved form in the tanks. The ion exchange membrane acts preferably as a separator between the two compartments and its electrolytes, as an ion conductor and as an electrical insulator. In the redox flow cell, power and energy are decoupled.

The redox flow cell according to the invention can be used particular in areas of load balancing, energy storage, peak shaving, uninterruptible power supply, power conversion, electric vehicles and as stand-alone power system.

The redox flow cell according to the invention is preferably charged with excess power. The excess power can originate from every kind of power production. Preferably the excess power originates from sustainable energy sources. Especially preferred are sustainable energy sources whose energy production is subject to natural influences. Such energy sources include solar power, water power, wind power, geothermal energy and ocean energy. Natural fluctuations in this type of energy production can be compensated for by planned charging and discharging of the redox flow cell. The redox flow cell can be used to store energy from power surplus. The cell can be discharged when there is a high current demand. In particular, the cell can also be used to ensure power supply in the event of faults. Faults comprise local or regional disruptions. The use of the redox flow cell according to the invention can therefore be particularly useful in facilities for which a constant power supply is essential. The redox flow cell can be installed at any location in the power grid. However, this location can also preferably be in the immediate vicinity of the energy production or demand site.

The present invention further relates to the use of an ion exchange membrane according to the invention in a redox flow cell, fuel cell or in a galvanic cell for separating a cathode chamber from an anode chamber. In a redox flow cell, the ion exchange membrane is preferably used, as already mentioned, as a separating wall between the two compartments and their electrolytes. In addition, it is also an ion conductor and electrical insulator. In a fuel cell, the chemical reaction energy of a fuel and an oxidant is converted into electrical energy. Thus, fuel cells function as energy converters. The fuel cell consists of electrodes that are separated by an ion exchange membrane. A galvanic cell is a device for converting chemical energy into electrical energy. Any combination of electrodes and electrolytes constitutes a galvanic cell.

In the redox flow cell according to the invention, ionic liquids can be used as redox flow battery electrolytes. They can be used as a supporting electrolyte, an additive, as reaction media or as active species for redox flow systems. The deployment as electrolyte additive aims the enhancement of the overall performance of the system. Ionic liquids used as electrolyte additives can enhance the system and cycling stability, the species diffusion, the solubility of active species and widen the electrochemical window of the medium. In redox flow cells the potential difference is limited by the stability of water at 1.23 V at standard conditions. Using ionic liquids the electrochemical window can be up to 6.0 V. As active species ionic liquids can be used either as stand-alone solutions or in combination with other species. When using ionic liquids as stand-alone solution they act as electrolyte and active species.

The present invention is further illustrated by the following examples, however, without being restricted thereto.

### EXAMPLES

### Materials

Three different base substrates were tested in the following examples: paper filters (General use filter paper DP 400 150, ALBET LabScience, average of 140 µm thickness), PES filters (Millipore Express PLUS hydrophilic PES filter, 0.22 µm pore size, 047 mm, 175 µm thickness, Sigma-Aldrich), and PVDF filters (Durapore^{®} hydrophilic PVDF filter, 0.22 µm pore size, Ø47 mm, 115 µm thickness, Sigma-Aldrich). Five different ionic liquids were analyzed in the examples: 1-allyl-3-methylimidazolium dicyanamide (≥ 98%, Sigma-Aldrich, AMIM-DCA), 1-ethyl-3-methylimidazolium acrylate (≥ 90%, proionic GmbH, EMIM-AC), 1-ethyl-3-methylimidazolium vinyl acetate (≥ 90%, proionic GmbH, EMIM-VA), 1-allyl-3-methylimidazolium methane sulfonate (≥ 90%, proionic GmbH, AMIM-MS) and 1-ethyl-3-methylimidazolium vinyl phosphonate (≥ 90%, proionic GmbH, EMIM-VP). Combination of three base layers, as well as the five different ionic liquids lead to 15 different membranes.

**Table: Structures of ionic liquids used in the examples.**

| **Name of the ionic liquid** | **Chemical structure** |
|---|---|
| 1-allyl-3-methylimidazolium dicyanamide | 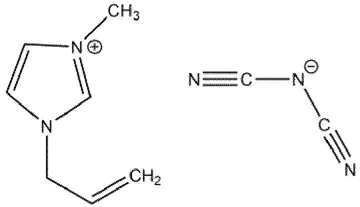 |
| 1-ethyl-3-methylimidazolium acrylate | 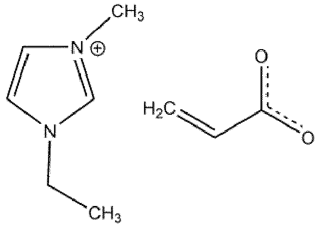 |
| 1-ethyl-3-methylimidazolium vinyl acetate | 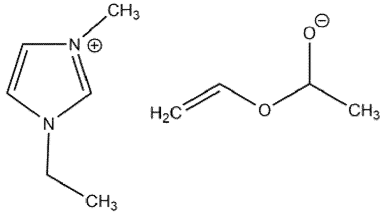 |
| 1-allyl-3-methylimidazolium methane sulfonate | 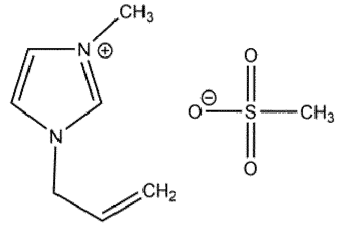 |
| 1-ethyl-3-methylimidazolium vinyl phosphonate | 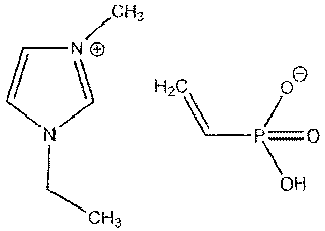 |

As monomers 2-hydroxyethyl methacrylate (Sigma-Aldrich, HEMA) and ethylene glycol di-methacrylate (Sigma-Aldrich, EGDMA) were used. The used initiator was tert-butyl peroxide (Sigma-Aldrich, TBPO). Monomers and initiator have been used without further treatment.

Hydrochloric acid (HCl, 0.1 mol/l, Carl Roth GmbH + Co. KG), hydrochloric acid (HCl, 1 mol/l, Carl Roth GmbH + Co. KG), sulfuric acid (H₂SO₄, Merck Millipore), phosphoric acid (H₃PO₄, Carl Roth GmbH + Co. KG), sodium hydroxide (NaOH, 0.1 mol/l, Honeywell International Inc), sodium hydroxide (NaOH, 1 mol/l, Honeywell International Inc), phenolphthalein (Reag. Ph Eur, Merck Millipore, 0.1 wt.% solution in ethanol), ethanol (EtOH, ≥99,8%, denatured, Carl Roth GmbH + Co. KG), acetic acid (≥95,9%, Carl Roth GmbH + Co. KG), p-anisaldehyde (4-methoxy benzaldehyde, Alfa Aesar), cyclohexane (Carl Roth GmbH + Co. KG) and ethyl acetate (Carl Roth GmbH + Co. KG) were used as received without any further treatment. For the zinc determination, zincon monosodium salt (C₂₀H₁₅N₄NaO₆S, MQ 100, Sigma-Aldrich) was used. HPTLC silica gel 60 F254 plates on aluminium support (Merk Millipore) and glass ring cap capillaries (10 µl, Hirschmann) were used for TLC. As active materials 2-methoxyhydroquinone (MHQ, batch synthesis as used by Schlemmer et al.), zinc sulfate heptahydrate (ZnSO₄*7H₂O, Sigma-Aldrich) and para-benzoquinone (pBQ, Sigma-Aldrich) have been used.

Four different types of commercially available membranes have been purchased to compare it with the currently used Nafion^{™} N211 (25.4 µm) membrane. Nafion^{™} N117 (183 µm) , Fumasep E-630 K (30 µm), Fumasep F-950 (50 µm) and Vanadion (254 µm) have been used. Nafion^{™} membranes, and the two Fumasep membranes have been purchased from Fuel Cell Store. The Vanadion membrane was provided by Ion-Power. Membranes differ in thickness as well as their chemical composition.

### Example 1: Preparation of the ion exchange membrane

For the production of the ion exchange membranes an adapted process of Kräuter et al. consisting of the following steps were used (Macromolecules 2020, 53, 7962):
1. Ionic liquid was dropped onto the substrate (i.e. membrane) .
2. The ionic liquid was degassed in a reaction chamber for at least 2 hours and a clean silicon wafer is added to the reaction chamber.
3. Monomers were heated up to a sufficient high temperature to enable evaporation.
4. Monomers and initiator were adjusted at base pressure.
5. The chamber pressure was decreased to the desired level.
6. The cooling stage was started inside the bottom of the reaction chamber the filaments are heated up.
7. A copolymer layer was formed in the chamber until a thickness on a silicon wafer of approximately 250 nm is achieved.

As polymerising and crosslinking groups EGDMA and HEMA were used at standard flow rates of 0.17 sccm and 0.42 sccm, respectively. For the initiation of the deposition tert-butyl peroxide was used at a flow rate of 0.76 sccm. During deposition the pressure in the chamber was held constant at 26.66 Pa. The filaments were heated to approximately 250°C and the bottom stage was cooled down to 30°C. for the formation of the monomer vapor EGDMA and HEMA were heated up to 85 and 75°C respectively. For the in-situ thickness analysis a Thor-Lab laser with a wavelength of 633 nm was used. The peak-to-peak amplitude corresponded to approximately 80 nm of polymer thickness on the silicon wafer. The polymerization was carried out until the ionic liquid was visible polymerised resulting in varying thickness of the polymer layer.

Depending on the ionic liquids, monomers and crosslinkers used for coating the membranes, the following structures were exemplarily obtained.

### 1-ethyl-3-methylimidazolium based ionic liquid:

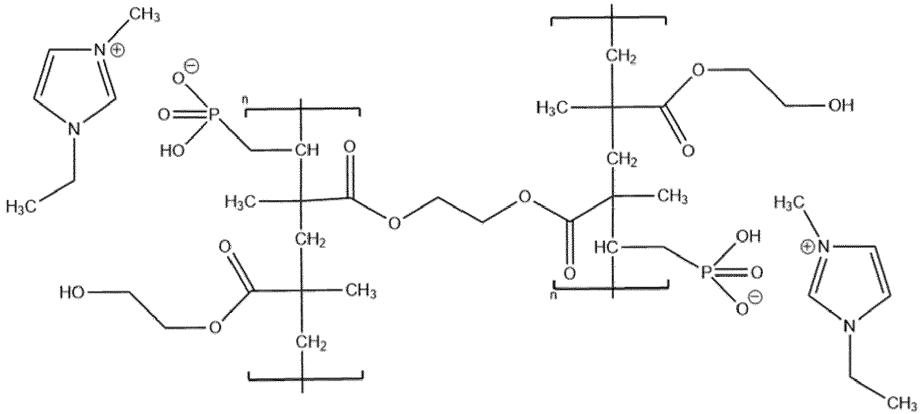

### 1-allyl-3-methylimidazolium based ionic liquid:

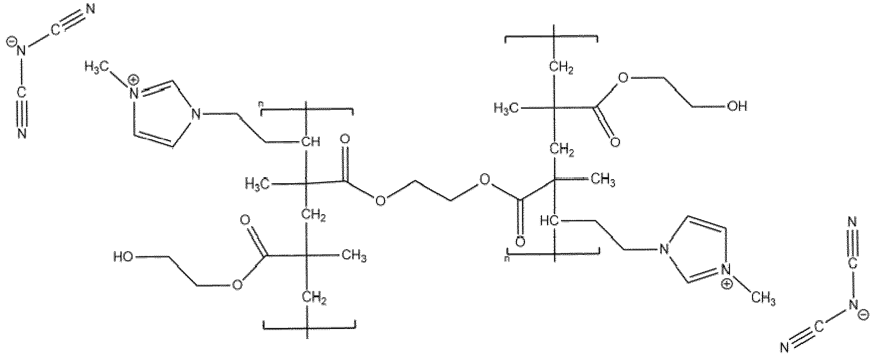

### Beispiel 2: Contact angle as indicator for diffusion and conductivity

The contact angle between the droplet and the substrate was measured with a STFI contact angle tester device. The volume of the droplet was measured as well. Both measurements were taken over a 60 second time period. For the formation of the droplet MilliQ(R) water in combination with 1-ethyl-3-methylimidazolium acrylate or 1-ethyl-3-methylimidazolium vinyl acetate was used. As substrate paper is used.

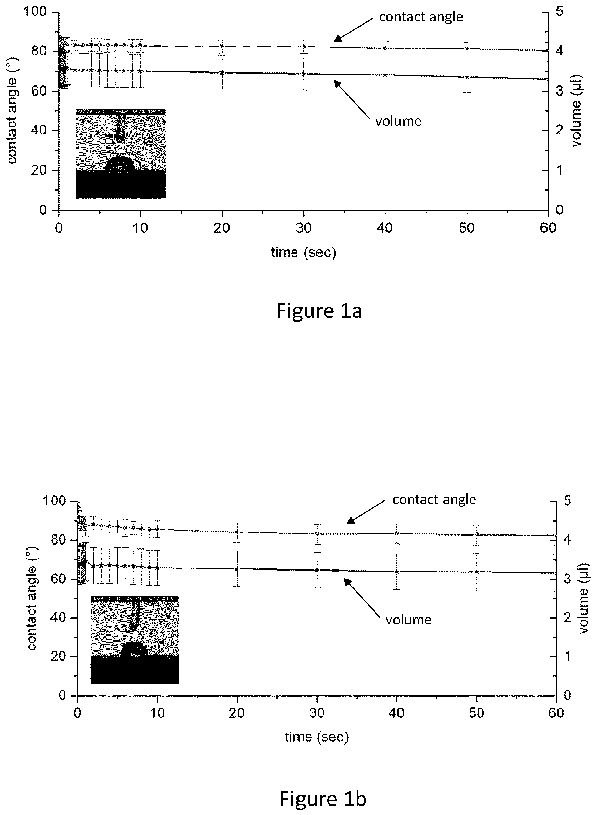

The results of the measurements are depicted in Fig. 1.

The contact angle of the paper/1-ethyl-3-methylimidazolium acrylate (EMIM-AC) membrane was around 85 degrees and was almost constant over the time period of 60 seconds (see Fig. 1a). Also, the volume of the drop stayed constant, since no water penetrated the matrix.

Similar results were obtained for the combination of paper/1-ethyl-3-methylimidazolium vinyl acetate (EMIM-VA). Here the contact angle is reduced from 95 to 85 degrees within the first 2 seconds of measurement. After that the angle remains constant (see Fig. 1b). The volume remains constant as well.

The measurements show that the contact angle is beneficial for the transport of the ions towards the membrane. The constant volume of the droplet indicates that water cannot penetrate the membrane quickly allowing the use of the membrane in applications such as redox flow batteries.

### Example 3: Diffusivity of active species in novel membranes compared to Nafion^{™} 211

The diffusivity of active species was analysed using a setup consisting of two pipes with an inner diameter of 25.4 mm, which were filled with a 2-methoxyhydroquinone (MHQ) and zinc solution. The two compartments were separated by a membrane obtained by example 1. 150 ml of the corresponding solution, with an active material concentration of 2.5 g/l, was filled into the compartment and sealed to prevent evaporation losses of the chemicals. After 24 hours samples were taken from the solution. The zinc concentration was measured using zincon (2-carboxy-2'-hydroxy-5'-sulfoformazylbenzene mono sodium salt) as complexing agent on a Shimadzu UV-1900i photometer by UV-Vis measurement and use of a calibration curve. The quinone evaluation was performed by thin layer chromatography in combination with colorimetric analysis. A calibration curve was used as well.

In the following table the loss of 2-Methoxyhydroquinone (MHQ) and zinc within 24 hours in percent is given for different paper/ionic liquid combinations and the reference membrane Nafion^{™} 211. The abbreviations in the table mean: 1-ethyl-3-methylimidazolium acrylate (EMIM-AC), 1-ethyl-3-methylimidazolium vinyl acetate (EMIM-VA) and 1-ethyl-3-methylimidazolium vinyl phosphonate (EMIM-VP).

| | **MHQ loss in 24 h [%]** | **Zinc loss in 24 h [%]** |
|---|---|---|
| **Nafion^{™} 211** | 9.02 | 24.19 |
| **EMIM-AC** | 0.41 | 5.29 |
| **EMIM-VA** | 5.60 | 16.67 |
| **EMIM-VP** | 6.53 | 9.27 |

The results show that the combination of the ionic liquid with the paper result in a low diffusivity of the active material present in fuel cells. All combinations show a significant lower loss of MHQ and zinc compared to the reference membrane Nafion^{™} 211.

### Example 4: Ion conductivity of novel membranes compared to Nafion^{™} 211

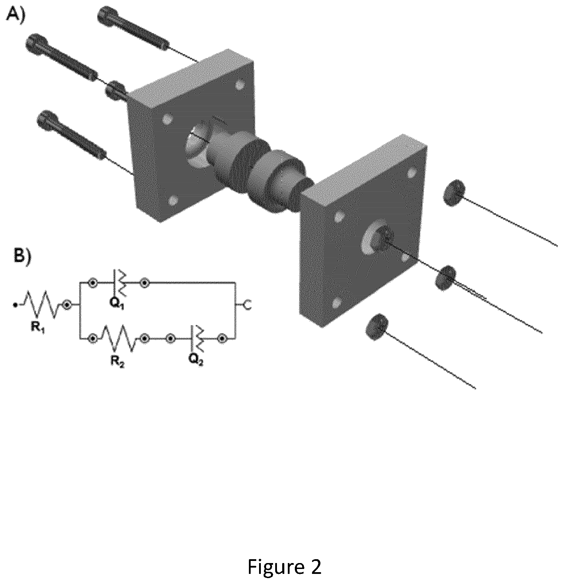

To measure the ion conductivity of the membranes an electrochemical impedance spectroscopy was carried out. To do so, a cell as described by Müller et al. (J. Phys. Chem. B 2014, 118, 1102) and shown in Fig. 2 together with the corresponding equivalent circuit was constructed. Prior to measurement, the membranes were soaked into 0.5 M phosphoric acid for 24 hours to simulate real operating conditions. The measurement was conducted with a Gamry 600 potentiostat over a frequency range of 1 MHz to 10 kHz at a voltage amplitude of 10 mV. After fitting to the equivalent circuit, the membrane resistance was calculated. To enable comparability the membrane resistance was normalised to the proton conductivity. The cell had a cross-sectional area of 1.77 cm².

In the following table the calculated ion conductivities are listed for different paper/ionic liquid combinations and the reference membrane Nafion^{™} 211. The abbreviations in the table mean: 1-ethyl-3-methylimidazolium acrylate (EMIM-AC), 1-ethyl-3-methylimidazolium vinyl acetate (EMIM-VA) and 1-allyl-3-methylimidazolium methane sulfonate (EMIM-MS).

| | **Ion conductivity [S/cm]** |
|---|---|
| **Nafion^{™} 211** | 2.85*10⁻⁴ |
| **EMIM-AC** | 1.01*10⁻³ |
| **AMIM-MS** | 3.61*10⁻³ |
| **EMIM-VA** | 1.06*10⁻³ |

As can be seen from the results in the table above, the membranes produced as described in example 1 have a higher ion conductivity than the reference membrane. High ion conductivity is an important property for ion exchange membranes.

### Example 5: Battery test of the paper/EMIM-AC membrane

A battery test was carried out with the redox couples 2-MHQ/MQ vs. p-BQ (para-benzo quinone), BHQ in a LAB-1×1 cell from C-Tech Innovation Ltd. (Chester, UK). The self-made pumping system was adjusted to the lowest flow rate, which was approximately 40 mL/min on both sides of the cell. The regulation of the flow was done by an Arduino Uno ATmega328 microcontroller, a Recom LED driver, an LCD display, RS pro flow sensors (0.05 - 10 L/min), a mean well power adapter (32 W, 6 A), a Fibox Euronorm cask, a MH Connector Sub-D, and a RS Pro Sub-D Print connector form RS Components (Gmünd, Austria). This setup was used to control the attached WPDC0.45L-3.1M-12 rotary pumps purchased from Rotek Handels GmbH (Austria). 0.02 g of each active substance mixed with 40 mL 0.5 M H₃PO₄ was used as the electrolytes. A constant voltage of 0.5 V/-0.5 V was applied during the 30 min charge/discharge cycle. To test the membranes 50 cycles were carried out.

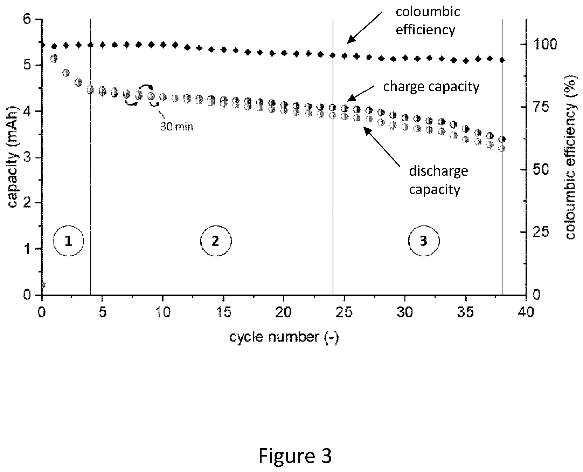

The measured data is shown in Fig. 3 and can be divided into three main areas: the startup phase, where the battery needs to stabilise; the stable phase, where the battery is working well; and the breakdown phase, where problems with the system occur. The battery is charged and discharged to around 4.5 mAh of its calculated capacity. The stable phase 2 is 20 cycles long which confirms that the battery can be applied to redox flow systems.

## Claims

1. A method for producing an ion exchange membrane comprising the steps of:
a. applying an ionic liquid comprising at least one polymerizable and/or crosslinking group at the cation and/or at the anion on a cellulosic substrate and
b. polymerizing and/or crosslinking said at least one polymerizable and/or crosslinking groups forming a polymer or copolymer layer on the cellulosic substrate.

2. The method for preparing an ion exchange membrane according to claim 1, wherein the polymerizable and/or crosslinking group is an alkenyl group or an alkynyl group.

3. The method for preparing an ion exchange membrane according to claim 1 or 2, wherein the cation of the ionic liquid is selected from the group consisting of imidazole salt cations and derivatives thereof, quaternary ammonium salt cations, pyrrole salt cations, quaternary phosphine salt cations and pyridine salt cations

4. The method for preparing an ion exchange membrane according to claim 3, wherein the salt cation is selected from the group consisting of 1-ethyl-3-methylimidazolium, 1-allyl-3-methylimidazolium, 1-butyl-3-methylimidazolium, 1-vinyl-3-butylimidazolium, triethyl(4-vinylbenzyl)phosphonium tetrafluoroborate, 1-ethyl-3-methylimidazolium, 1-Hexyl-3-ethylimidazolium, 1-Methylimidazolium, 1-Hexyl-3-methylimidazolium 1-butyl-1-methylpiperidinium, 2-hydroxyethyl-trimethylammonium, trihexyltetradecylphosphonium or 1-butyl-1-methylpyrrolidinium.

5. The method for preparing an ion exchange membrane according to any one of claims 1 to 4, wherein the anion of the ionic liquid is selected from the group consisting of acrylate, dicyanamide, acetate, preferably vinyl acetate, phosphonate, preferably vinyl phosphonate, bis((trifluoromethyl)sulfonyl)imide, bis((pentafluoromethyl)sulfonyl)imide, hexafluoro phosphate, tetrafluoroborate, methyl sulfate, triflate, thiocyanate, trifluoroacetate, hydrogen sulfate or halides.

6. The method for preparing an ion exchange membrane according to any one of claims 1 to 5, wherein the polymerisation is initiated by a radical reaction induced by chemical, and/or photochemical, and/or thermochemical and/or plasma methods.

7. The method for preparing an ion exchange membrane according to any one of claims 1 to 6, wherein the polymerisation is initiated by means of vapor deposition which includes oxidative chemical vapor deposition, chemical initiated vapor deposition and plasma enhanced chemical vapor deposition or by the use of UV radiation, thermal activation and formation of radicals with transition metal complexes, which employ an alkyl halide as initiator.

8. The method for preparing an ion exchange membrane according to any one of claims 1 to 7, wherein the cellulosic substrate is contacted after step a. with at least one polymerizable monomer and/or at least one crosslinker.

9. The method for preparing an ion exchange membrane according to claim 8, wherein the at least one polymerizable monomer and/or the at least one crosslinker comprises at least one alkenyl or alkynyl group or ring structure which can be opened during reaction.

10. The method for preparing an ion exchange membrane according to claim 8 or 9, wherein at least one polymerizable monomer and/or at least one crosslinker is selected from the group consisting of methacrylic acid, a methacrylate, divinyl benzene, hexa-vinyl disiloxane, 1,3,5-trimethyl-1,3,5-trivinylcyclotrisiloxan, or ethylene glycol dimethacrylate.

11. The method for preparing an ion exchange membrane according to any one of claims 1 to 10, wherein said cellulosic substrate is a paper derived from a cellulosic raw material which can be used in an acidic or alkaline environment without decomposition, is able to act as a supporting material for the polymer and enables a covalent or physical binding of the polymer towards the cellulose or cellulose derivative.

12. The method for preparing an ion exchange membrane according to any one of claims 1 to 11, wherein application of the ionic liquid on the cellulosic substrate is carried out by means of solution based coating technologies, such as blade casting, drop casting, spin coating, dip coating, spray coating, and/or gas phase deposition methods using a vapor deposition in a vacuum.

13. An ion exchange membrane obtainable by a method of any one of claims 1 to 12.

14. A redox flow cell comprising an ion exchange membrane according to claim 13 between a cathode and an anode cell.

15. Use of an ion exchange membrane according to claim 13 in a redox flow cell, fuel cell or in a galvanic cell for separating a cathode chamber from an anode chamber.
